# FASCICULE DE BREVET EUROPEEN

(11) **EP 3 544 264 B1**
(45) Date de publication et mention de la délivrance du brevet: **16.06.2021**
(21) Numéro de dépôt: 19164374.1
(22) Date de dépôt: 21.03.2019
(51) Int. Cl.: H04L 29/08, G06F 8/61, H04L 12/28, H04L 12/40

(54) **PROCÉDÉ DE FONCTIONNEMENT D'UN APPAREIL ÉLECTRIQUE ET APPAREIL ÉLECTRIQUE METTANT EN OEUVRE CE PROCÉDÉ**
FUNKTIONSAABLAUFSVERFAHREN FÜR EIN ELEKTRISCHES GERÄT UND ELEKTRISCHES GERÄT DAFÜR
AN OPERATING METHOD FOR AN ELECTRICAL APPARATUS AND AN ELECTRICAL APPARATUS IMPLEMENTING THIS METHOD

(30) Priorité: 22.03.2018 FR 1852481
(43) Date de publication de la demande: 25.09.2019
(73) Titulaire: Schneider Electric Industries SAS, 92500 Rueil Malmaison (FR)
(72) Inventeur: SHEN, Jiyue, 38050 GRENOBLE Cedex 09 (FR); BOHRER, Roland, 38050 GRENOBLE Cedex 09 (FR)
(74) Mandataire: Lavoix

(56) Documents cités:
- OZANSOY C R ET AL: "The Real-Time Publisher/Subscriber Communication Model for Distributed Substation Systems", IEEE TRANSACTIONS ON POWER DELIVERY, IEEE SERVICE CENTER, NEW YORK, NY, US, vol. 10, no. 3, 1 juillet 2007 (2007-07-01), pages 1411-1423, XP011186611, ISSN: 0885-8977

## Description

La présente invention concerne un procédé de fonctionnement d'un appareil électrique et un appareil électrique mettant en oeuvre ce procédé.

L'invention s'applique plus généralement au domaine des appareils électriques utilisés dans des installations électriques, notamment des appareils de protection électrique, de mesure électrique ou de commutation électrique, et plus particulièrement des appareils de coupure d'un courant électrique tels que des disjoncteurs ou des contacteurs, ces appareils électriques étant pourvus d'une unité de commande électronique apte à exécuter des applications logicielles embarquées. Ces applications permettent de mettre en oeuvre des fonctionnalités avancées, telles que des fonctions de commande, de supervision et de gestion à distance, qui améliorent le fonctionnement de ces appareils.

Un exemple d'appareils électriques connectés entre eux par un réseau de télécommunications est décrit par l'article de C. R. Ozansoy et al. « The Real-Time Publisher/Subscriber Communication Model for Distributed Substation Systems » publié dans la revue « IEEE Transactions on Power Delivery », vol. 10, n° 3, juillet 2007, pages 1411-1423.

Il est souhaitable de pouvoir faire évoluer ces fonctions au cours du temps et en fonction des besoins des utilisateurs. Par exemple, les utilisateurs peuvent choisir de n'utiliser que les fonctions qui les intéressent en fonction de l'usage auquel l'appareil est destiné. Ils peuvent également vouloir rajouter ou enlever certaines fonctions, si leurs besoins évoluent au cours du temps. Cela permet aussi au fabricant de faire évoluer les appareils tout au long de leur durée de vie, voire de proposer aux utilisateurs des fonctions spécifiques conçues sur mesure en fonction de besoins particuliers. En effet, il n'est pas toujours possible de savoir, lors de la conception d'un produit, quel sera l'usage qui en sera fait par les utilisateurs tout au long du cycle de vie de ce produit.

Un tel comportement évolutif doit pouvoir être facile et rapide à mettre en oeuvre par les utilisateurs. A cette fin, les applications sont distribuées sous la forme de modules logiciels exécutables qui peuvent être « enfichés », c'est-à-dire installés et désinstallés « à chaud » dans l'unité de commande, par le client, pendant le fonctionnement de l'appareil.

Typiquement, une fois installées, ces applications sont exécutées par l'unité de commande. Lors de leur exécution, elles génèrent un flux de données destinées à être transmises à un récepteur distant. Les données peuvent porter sur des données d'état relatives au fonctionnement de l'appareil, et/ou relatives à des mesures de grandeurs électriques et/ou à des indicateurs calculés ou composites relatifs à l'appareil et/ou à l'installation électrique avec laquelle l'appareil est associé. Les données sont par exemple générées et destinées à être envoyées en continu ou périodiquement au cours du temps. Grâce à cet envoi de données, l'appareil peut être commandé, piloté et supervisé à distance. L'envoi des données vers le récepteur distant est assuré par une interface de communication embarquée à bord de l'appareil, qui est connectée à l'unité de commande par une liaison de données interne.

Un inconvénient de ces appareils connus est que, dans certains cas, le destinataire des données peut vouloir ne pas recevoir certains types de données générées par les applications installées. En effet, les applications sont souvent des modules génériques produits par un éditeur et obtenus auprès de magasins d'applications en ligne. En d'autres termes, les applications ne sont pas toujours conçues sur mesure pour l'utilisateur, et il arrive souvent qu'un utilisateur ait besoin de seulement certaines données générées par une application, sans avoir besoin des autres données générées par cette application. L'utilisateur ne peut pas toujours choisir précisément quelles données sont générées par l'application.

Il convient d'éviter l'envoi de données dont l'utilisateur n'a pas besoin, car cela sature inutilement les liaisons d'échanges de données, ce qui peut porter préjudice au bon fonctionnement de l'appareil, et même compromettre la capacité de l'utilisateur à piloter et superviser l'appareil à distance.

Il n'est pas souhaitable de paramétrer trop rigoureusement à l'avance l'interface de communication avec des paramètres figés, car cela nuirait au caractère évolutif de l'appareil. Il n'est pas non plus souhaitable d'imposer à l'utilisateur de paramétrer manuellement l'interface de communication à chaque fois qu'un module est installé, car cela compliquerait considérablement l'utilisation de l'appareil.

Il existe donc un besoin pour un appareil électrique, et un procédé de fonctionnement associé, dans lequel l'interface de communication est configurée automatiquement lors de l'installation d'un module exécutable dans l'unité de commande de l'appareil électrique.

A cet effet, l'invention concerne un procédé de fonctionnement d'un appareil électrique, tel qu'un appareil de mesure ou de protection ou de commande d'une installation électrique, l'appareil électrique comportant une unité de commande électronique connectable à une passerelle de communication par une liaison locale d'échange de données ;
- l'unité de commande recevant une ou plusieurs applications logicielles exécutables, chaque application générant des données selon un ou plusieurs types prédéfinis de données lorsqu'elle est exécutée par l'unité de commande,
- l'unité de commande envoyant, vers la passerelle de communication et au moyen de la liaison locale d'échange de données, les données générées par les applications installées dans l'unité de commande, uniquement si ces données correspondent à un type de données auquel la passerelle de communication est abonnée, ;
- ce procédé comportant des étapes d'auto-configuration de l'interface de communication, mises en œuvre automatiquement suite à l'installation d'une nouvelle application au cours du fonctionnement de l'appareil électrique, dans laquelle :
- l'unité de commande diffuse, sur la liaison locale de données, une notification de l'installation d'une nouvelle application ;
- l'unité de commande reçoit, en réponse, de la passerelle de communication, une demande d'abonnement à des types de données auxquels la passerelle n'est pas encore abonnée et, en réponse, compare les types listés dans la demandes d'abonnement avec les types de données générées par l'application nouvellement installée, la demande d'abonnement à un type de donnée étant acceptée si des données correspondant à ce type de données ont été générées, la demande d'abonnement à un type de donnée étant refusée dans le cas contraire ;
- l'unité de commande renvoie une réponse à la passerelle de communication pour mise à jour du statut d'abonnement accepté ou refusé pour chaque type de donnée dont la demande d'abonnement a été acceptée ou refusée.

Grâce à l'invention, l'interface de communication est automatiquement paramétrée suite à l'installation d'une application, sans requérir d'intervention manuelle de l'utilisateur lors de chaque installation.

Selon des aspects avantageux mais non obligatoires de l'invention, un tel procédé peut incorporer une ou plusieurs des caractéristiques suivantes, prises isolément ou suivant toute combinaison techniquement admissible :
- Les étapes de réception d'une demande d'abonnement, de comparaison et de renvoi d'une réponse sont répétées avec un nombre d'itérations prédéfini, par exemple compris entre deux et dix, de préférence est compris entre trois et six, de préférence encore est égal à cinq.
- Chaque répétition étant mise en œuvre au plus tard au bout d'une durée prédéfinie suivant la fin de la précédente répétition de ces étapes.
- La durée prédéfinie est inférieure ou égale à 5 secondes, de préférence est inférieure ou égale à 1 seconde.
- Les étapes de réception d'une demande d'abonnement, de comparaison et de renvoi d'une réponse sont répétées au bout d'une deuxième durée prédéfinie.
- La deuxième durée est supérieure à la première durée, par exemple supérieure ou égale à une heure.
- Le procédé comporte des étapes de désabonnement automatique, dans lesquelles :
   - l'unité de commande reçoit de nouveau, une demande d'abonnement envoyée par la passerelle de communication après que la passerelle de communication a détecté qu'elle ne reçoit plus de données correspondant à un des types de données auxquelles elle est abonnée;
   - L'unité de commande répond par un refus d'abonnement pour que la passerelle de communication mette à jour le statut des données correspondantes de la liste d'abonnement vers un statut « non-abonné ».
- Les données émises par l'unité de commande sur la liaison locale d'échange de données sont encapsulées au sein de trames, chaque trame comportant des métadonnées d'adressage et de synchronisation incluant une valeur de périodicité d'envoi de ce type de donnée, et dans lequel, la passerelle de communication considère une donnée associée à un type de donnée comme n'étant plus reçue si aucune donnée correspondant à ce type de donnée n'a été reçue au bout d'une durée supérieure à la valeur de périodicité d'envoi contenue dans la dernière trame reçue pour ce type de donnée.
- Postérieurement à l'étape de renvoi d'une réponse à la passerelle de communication, l'unité de commande autorise l'envoi, sur la liaison interne d'échange de données et à destination de la passerelle de communication, des données générées par l'application nouvellement installée correspondant aux types de données pour lesquels la passerelle de communication est abonnée.

Selon un autre aspect, de fonctionnement d'un ensemble comportant un appareil électrique comportant une unité de commande électronique et une passerelle de communication, l'appareil électrique comportant une unité de commande électronique connecté à la passerelle de communication par une liaison locale d'échange de données via une interface de communication de l'appareil électrique,
l'unité de commande recevant une ou plusieurs applications logicielles exécutables, chaque application générant des données selon un ou plusieurs types prédéfinis de données lorsqu'elle est exécutée par l'unité de commande,
l'unité de commande envoyant, vers la passerelle de communication et au moyen de la liaison locale d'échange de données, les données générées par les applications installées dans l'unité de commande, uniquement si ces données correspondent à un type de données auquel la passerelle de communication est abonnée ;
dans lequel le procédé comporte des étapes d'auto-configuration de l'interface de communication selon l'invention,
dans lequel la passerelle de communication enregistre le statut d'abonnement pour chaque type de donnée ;
dans lequel, en réponse à la diffusion par l'unité de commande d'une notification de l'installation d'une nouvelle application, la passerelle de communication acquiert la liste des types de données auquel elle n'est pas encore abonnée puis envoie à l'unité de commande une demande d'abonnement à ces types de données ;
dans lequel la passerelle de communication met à jour, en fonction de la réponse renvoyée par l'unité de commande, le statut d'abonnement accepté ou refusé pour chaque type de donnée dont la demande d'abonnement a été acceptée ou refusée.

Selon un autre aspect, la passerelle de communication détecte qu'elle ne reçoit plus de données correspondant à un des types de données auxquelles elle est abonnée, puis en réponse, la passerelle de communication envoie de nouveau une demande d'abonnement à l'unité de commande, puis après réception d'un refus d'abonnement envoyé par l'unité de commande, la passerelle de communication met à jour le statut des données correspondantes de la liste d'abonnement vers un statut « non-abonné ».

Selon un autre aspect, l'invention concerne un appareil électrique, tel qu'un appareil de mesure ou de protection ou de commande d'une installation électrique, l'appareil électrique comportant une unité de commande électronique connectable à une passerelle de communication par une liaison locale d'échange de données via une interface de communication de l'appareil électrique ;
- l'unité de commande étant apte à recevoir une ou plusieurs applications logicielles exécutables, chaque application étant programmée pour générer des données selon un ou plusieurs types prédéfinis de données lorsqu'elle est exécutée par l'unité de commande ;
- l'unité de commande étant configurée pour envoyer, vers la passerelle de communication et au moyen de la liaison locale d'échange de données, les données générées par les applications installées dans l'unité de commande, uniquement si ces données correspondent à un type de données auquel la passerelle de communication est abonnée;
- l'unité de commande et la passerelle de communication étant en outre programmées pour mettre en œuvre automatiquement des étapes d'auto-configuration de l'interface de communication, suite à l'installation d'une nouvelle application au cours du fonctionnement de l'appareil électrique, dans laquelle :
- l'unité de commande diffuse, sur la liaison locale de données, une notification de l'installation d'une nouvelle application ;
- lorsque l'unité de commande reçoit, en réponse, de la passerelle de communication, une demande d'abonnement à des types de données auxquels la passerelle n'est pas encore abonnée, alors en réponse, l'unité de commande compare les types listés dans la demandes d'abonnement avec les types de données générées par l'application nouvellement installée, la demande d'abonnement à un type de donnée étant acceptée si des données correspondant à ce type de données ont été générées, la demande d'abonnement à un type de donnée étant refusée dans le cas contraire ;
- renvoie une réponse à la passerelle de communication pour mise à jour du statut d'abonnement pour chaque type de donnée dont la demande d'abonnement a été acceptée ou refusée.

Selon un autre aspect, l'invention concerne un ensemble comportant un appareil électrique, tel qu'un appareil de mesure ou de protection ou de commande d'une installation électrique, et une passerelle de communication, l'appareil électrique comportant une unité de commande électronique connectée à la passerelle de communication par une liaison locale d'échange de données via une interface de communication de l'appareil électrique ;
l'appareil électrique étant tel que décrit précédemment,
la passerelle de communication étant en outre programmée pour :
- enregistrer le statut d'abonnement pour chaque type de donnée ;
- en réponse à la diffusion par l'unité de commande d'une notification de l'installation d'une nouvelle application, acquérir la liste des types de données auquel elle n'est pas encore abonnée puis envoyer à l'unité de commande une demande d'abonnement à ces types de données ;
- mettre à jour, en fonction de la réponse renvoyée par l'unité de commande, le statut d'abonnement accepté ou refusé pour chaque type de donnée dont la demande d'abonnement a été acceptée ou refusée.

L'invention sera mieux comprise et d'autres avantages de celle-ci apparaîtront plus clairement à la lumière de la description qui va suivre, d'un mode de réalisation d'un procédé de fonctionnement d'un appareil électrique, donnée uniquement à titre d'exemple et faite en référence aux dessins annexés dans lesquels :
- la figure 1 est une représentation schématique d'un appareil électrique selon l'invention ;
- la figure 2 est une représentation simplifiée d'une trame encapsulant une donnée envoyée par une application installée dans l'appareil électrique de la figure 1 ;
- la figure 3 est un ordinogramme d'un procédé de fonctionnement de l'appareil de la figure 1 ;
- la figure 4 est un ordinogramme d'un mode de réalisation particulier du procédé de fonctionnement de la figure 3.

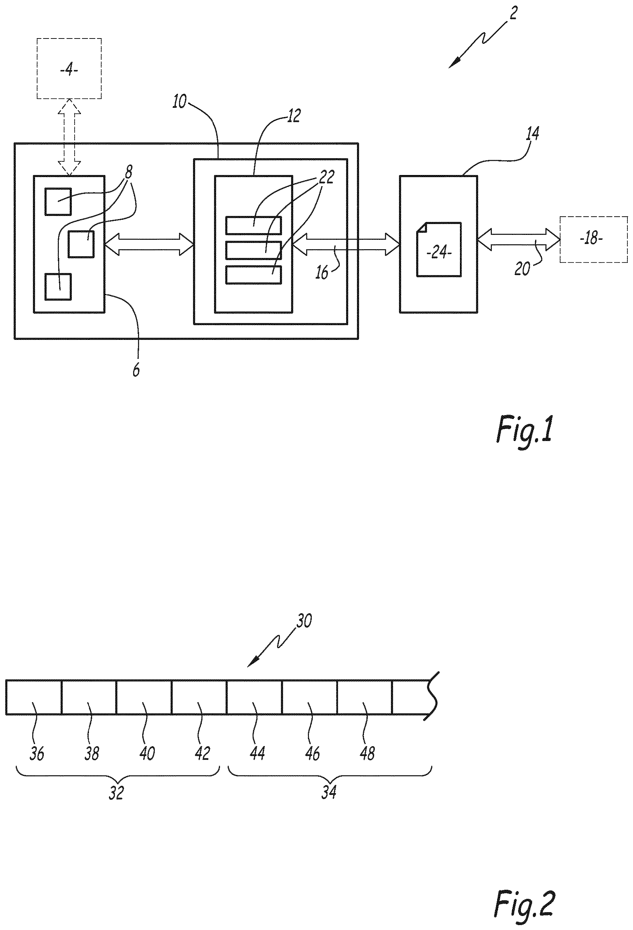

La figure 1 représente un exemple d'un appareil électrique 2 associé à une installation électrique 4. Par exemple, l'installation 4 est une installation de distribution d'électricité destinée à alimenter électriquement un ou plusieurs appareils de puissance, ici en milieu industriel ou domestique. Dans cet exemple, l'appareil électrique 2 est raccordé à l'installation 4 pour piloter et/ou superviser tout ou partie de l'installation 4.

Selon différents modes de réalisation, l'appareil électrique 2 est un appareil de protection électrique ou un appareil de mesure électrique ou un appareil de commutation électrique, notamment un appareil de coupure électrique.

Dans cet exemple illustratif, l'appareil 2 est un disjoncteur ou un contacteur adapté pour interrompre l'alimentation électrique de l'installation 4 en cas de détection d'un défaut électrique ou en réponse à une commande d'un utilisateur.

La référence 6 désigne une partie principale de l'appareil 2 qui est destinée à interagir avec l'installation 4 et qui est adaptée pour mettre en œuvre une ou plusieurs fonctions principales 8 de l'appareil, telles que des fonctions de mesure, et/ou de protection et/ou de pilotage et de commande de l'installation 4. Par exemple, la partie principale 6 comporte un ou plusieurs dispositifs électromécaniques, ou électriques, ou magnéto-électriques, ou tout autre dispositif équivalent. Par exemple, dans le cas où l'appareil 2 est un disjoncteur, la partie principale 6 comporte un organe de coupure du courant électrique adapté pour interrompre l'alimentation électrique de l'installation 4.

L'appareil 2 comporte également un dispositif de commande 10 électronique embarqué qui inclut une unité de commande électronique 12. Une passerelle de communication 14 est connectée à l'appareil 2 et à l'unité 12 par l'intermédiaire d'une liaison locale 16 d'échange de données.

L'unité de commande 12 est destinée à piloter ou au moins à superviser tout ou partie des fonctions 8 mises en œuvre par la partie principale 6 de l'appareil 2. Ainsi, l'unité 12 est connectée à la partie principale 6.

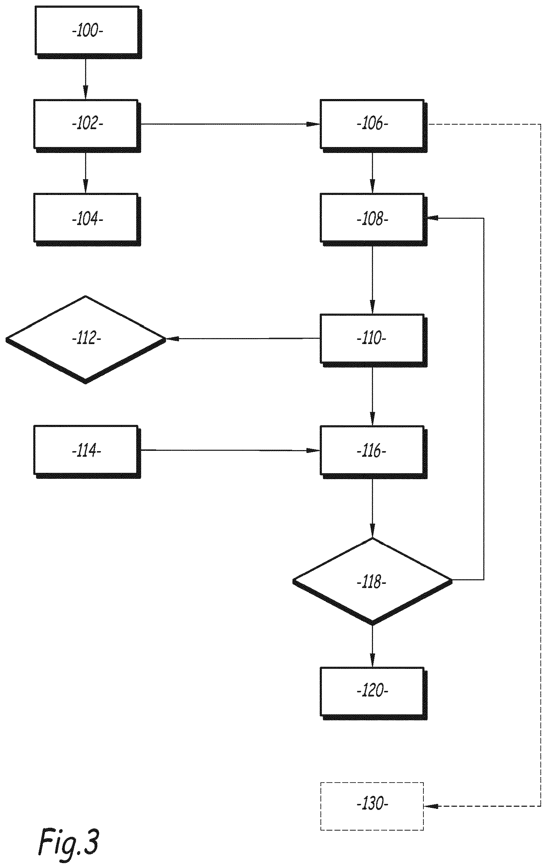

L'unité de commande 12 comporte ici une unité logique de calcul, telle qu'un microprocesseur ou un microcontrôleur, une mémoire informatique et une interface de communication adaptée pour être raccordée à la liaison 16. La mémoire comporte un ou plusieurs modules de mémoire non volatile, par exemple de technologie Flash ou EEPROM ou toute autre technologie de stockage de données équivalente. La mémoire comporte notamment des instructions exécutables, telles que du code machine exécutable par l'unité de commande 12 et/ou des instructions interprétables par un interpréteur implémenté par l'unité de commande 12, permettant notamment la mise en œuvre le procédé de la figure 3.

La passerelle de communication 14 est adaptée pour communiquer avec un terminal distant 18 situé à l'extérieur de l'appareil 2 au moyen d'une liaison de données 20, telle qu'une liaison réseau, par exemple une liaison Ethernet. Par exemple, le terminal 18 est un client informatique tel qu'un système de contrôle industriel de type SCADA.

Dans cet exemple, la passerelle 14 comprend une unité logique de calcul de type microprocesseur ou microcontrôleur, une mémoire informatique, une interface de communication compatible avec la liaison 16, ainsi qu'une interface de communication avec le terminal distant 18. La mémoire comporte un ou plusieurs modules de mémoire non volatile, par exemple de technologie Flash ou EEPROM ou toute autre technologie de stockage de données équivalente. La mémoire comporte notamment des instructions exécutables, telles que du code machine exécutable par logique de calcul de la passerelle 14 et/ou des instructions interprétables par un interpréteur implémenté par l'unité logique de calcul de la passerelle 14, permettant notamment la mise en œuvre le procédé de la figure 3.

La liaison 16 est ici un bus d'échange de données filaire, tel qu'un bus de terrain, par exemple de type CAN ou analogue. En variante, une liaison de données utilisant un protocole basé sur le protocole TCP/IP et comportant des couches applicatives analogues peut également convenir.

Le dispositif de commande 10 peut également comporter un panneau de commande local, non illustré, comprenant une interface de commande homme-machine pouvant inclure un écran d'affichage électronique et/ou des organes de commande et de saisie de données tel qu'un clavier ou un écran tactile, ainsi qu'une interface de communication locale sans fil à courte portée et/ou une interface de communication filaire, par exemple une liaison USB, et/ou un lecteur adapté pour lire un support d'enregistrement d'information amovible, tel qu'une carte mémoire.

L'unité de commande 12 est programmée pour recevoir des modules logiciels exécutables 22 qui sont adaptés pour être installés dans l'unité de commande 12 et, une fois installés, peuvent être exécutés par l'unité logique de calcul de l'unité de commande 12. Les modules 22 sont nommés « applications » ou « modules applicatifs » dans ce qui suit. Les applications 22 permettent de mettre en œuvre des fonctionnalités avancées, telles que des fonctions de commande, de mesure, de traitement, de supervision et de gestion à distance de l'appareil 2 et/ou de l'installation 4. Dans certains cas, les applications 22 sont également adaptées pour commander une ou plusieurs fonctions 8 de l'appareil 2, en fonction d'ordres de commande émis à distance et reçus par l'intermédiaire de la passerelle 14.

Chaque application 22 comporte des instructions exécutables et/ou interprétables par l'unité de calcul logique de l'unité de commande 12. Les applications 22 peuvent être téléchargées depuis un serveur informatique distant ou depuis un service en ligne de type informatique en nuage et/ou transférés depuis un support physique d'enregistrement d'informations par l'intermédiaire du panneau de commande local.

Les applications 22 sont « enfichables », c'est-à-dire qu'elles peuvent être installées et désinstallées « à chaud » dans l'unité de commande 22 pendant le fonctionnement de l'appareil 2, sans qu'il ne soit nécessaire d'éteindre ou de redémarrer l'appareil 2 ou l'unité de commande 12 ni d'interrompre le fonctionnement de l'appareil 2, de la partie principale 6. Par exemple, l'installation d'une application 22 est réalisée par un utilisateur. En particulier, la liaison 16 n'est pas interrompue ni réinitialisée et reste opérationnelle.

Par exemple, l'unité de commande 12 comporte un système d'exploitation embarqué. Ce système d'exploitation est mis en œuvre en exécutant des instructions contenues dans la mémoire de l'unité de commande 12. Le système d'exploitation définit une zone de réception dans une mémoire de travail de l'unité de commande 12, dans laquelle sont reçues les applications 22 une fois qu'elles sont installées. Le système d'exploitation supervise l'accès des applications 22 aux ressources matérielles de l'unité de commande 12 ainsi qu'à la partie principale 6. De cette manière, les applications 22 peuvent superviser et/ou piloter tout ou partie des fonctions 8.

Chaque application 22 génère, lors de son exécution, au moins un flux de données aptes à être transmises à la passerelle 14. Les données dépendent de la nature et du rôle de l'application 22 correspondante. Par exemple, les données peuvent être représentatives d'un état interne de l'appareil 2, ou de l'installation électrique 4 avec laquelle l'appareil 2 est associé, ou d'une fonction 8 de l'appareil 2. Par exemple, ces données concernent la présence ou l'absence d'alimentation électrique, l'état ouvert/fermé d'un organe de coupure, ou un nombre de cycles d'utilisation d'un élément, ou l'indication d'une défaillance ou d'une anomalie. Les données peuvent aussi être représentatives de grandeurs électriques, qu'elles soient mesurées ou calculées, comme : la puissance électrique, la tension électrique, le courant électrique, ou les harmoniques de ces grandeurs électriques, mais aussi un déphasage, ou un facteur de puissance, ou une quantité d'énergie. Ces grandeurs peuvent être instantanées ou moyennées dans le temps sur une durée prédéfinie.

Les données sont par exemple générées et destinées à être envoyées à la passerelle 14. Ainsi, l'appareil 2 peut être commandé et supervisé à distance depuis le terminal 18.

Les données générées par les applications 22 peuvent appartenir à différents types de données, ou familles de données. On comprend donc que l'expression « type de donnée » n'est pas limitée à un type statique de données et qu'au sens de la présente description, un « type de donnée » peut également désigner un élément de nommage ou un identifiant d'une famille de donnée ou d'un flux de données. Les éléments de nommage ou les identifiants sont par exemple définis par le fabricant de l'appareil 2. Le type de donnée est par exemple encodé numériquement sous la forme d'une variable, telle qu'une chaîne de caractères alphanumérique ou un indice numérique.

Par exemple, en pratique, les données sont générées par chaque application 22 de façon continue ou répétée au cours du temps. Les données sont donc préférentiellement organisées sous la forme de flux de données. Chaque flux de données est une suite de données individuelles générées successivement au cours du temps. Les données d'un même flux sont toutes d'un même type. Chaque flux de données est identifié de façon unique par une valeur spécifique de type de donnée.

De préférence, lorsqu'une donnée est envoyée par l'unité de commande 12 vers la passerelle 14 au moyen de la liaison 16, cette donnée est encapsulée au sein d'une trame, ou message.

Comme illustré sur la figure 2, chaque trame 30 comporte des métadonnées 32 d'adressage et de synchronisation et un corps 34 dans lequel est stocké le contenu informationnel de la trame, notamment la donnée correspondante. Dans cet exemple illustratif et non nécessairement limitatif, les métadonnées 32 comportent :
- un identifiant 36 du destinataire du message,
- un identifiant 38 de l'émetteur du message,
- un identifiant 40 de la nature du message, notamment pour indiquer si le message fait partie d'un flux dans lequel des messages sont envoyés périodiquement,
- une valeur 42 de périodicité d'envoi du message associé à ce flux de donnes.

Le corps 34 comporte au moins une donnée générée par un application 22. Pour chaque donnée, le corps 34 comporte :
- un identifiant 44 du type de donnée,
- un identifiant 46 de l'unité physique de la donnée, par exemple exprimée dans le Système International,
- la valeur 48 de la donnée.

Le format de la trame 30 peut être différent. En pratique, le format de la trame 30 est adapté en fonction de la technologie employée pour mettre en œuvre la liaison 16.

Par exemple, chaque trame 30 est construite automatiquement par l'unité de commande 12 à partir de données générées par une application 22.

Selon des modes de mise en œuvre préférés, les données générées par les applications 22 ne sont pas nécessairement envoyées systématiquement à la passerelle 14. En effet, dans certains cas, l'utilisateur final peut ne pas avoir besoin de toutes les données générées et peut choisir de ne recevoir que certaines des données générées.

Ainsi, la passerelle 14 met à disposition du terminal 18 les données qu'un utilisateur a indiqué souhaiter recevoir. La passerelle 14 collecte auprès de l'appareil 2 uniquement les données définies par l'utilisateur comme devant être mises à disposition du terminal 18.

A cette fin, la passerelle 14 comporte un système de gestion d'abonnement. Comme illustré sur la figure 1, la passerelle 14 comporte une liste d'abonnement 24 dans laquelle sont définis le ou les types de données que l'utilisateur souhaite recevoir. La liste d'abonnement 24 est par exemple paramétrable par un utilisateur.

La liste d'abonnement 24 contient une ou plusieurs entrées dont chacune associe un identifiant d'un type de donnée avec un statut d'abonnement. Par exemple, le terme « liste » désigne ici de façon générique une structure de données de type liste, ou tableau, ou vecteur, ou base de données, ou un arbre, ou toute autre structure de données appropriée.

Le statut d'abonnement est ici une variable qui peut prendre l'un des états suivants : abonné (« subscribed » en anglais), non-abonné (« unsubscribed ») ou en cours de découverte (« discovering »). Le statut d'abonnement peut être encodé sous forme numérique, par exemple en tant que chaîne de caractères alphanumériques ou en tant que valeur numérique.

Au sens de la présente description, la passerelle 14 est dite abonnée à un flux de données d'un type donné lorsque ce type de donnée correspondant est présent dans la liste d'abonnement 24 et que le statut d'abonnement auquel il est associé dans cette liste est égal à « abonné ». La passerelle 14 n'est pas abonnée à un flux de données d'un type donné lorsque ce type de donnée correspondant est présent dans la liste d'abonnement 24 et que le statut d'abonnement auquel il est associé dans cette liste est égal à « non-abonné », ou bien lorsque le type de donnée correspondant ne figure pas dans la liste d'abonnement 24.

Plus précisément, dans cet exemple, un type de donnée inscrit dans la liste 24 mais dont le statut d'abonnement est égal à « non-abonné » correspond à un type de donnée qui n'est pas encore générée par les applications 22 mais que l'utilisateur souhaite recevoir lorsque cette donnée sera disponible. Un type de donnée qui n'est pas inscrit dans la liste 24 correspond à un type de donnée que l'utilisateur ne souhaite pas recevoir.

L'unité de commande 12 est quant à elle configurée pour envoyer, vers la passerelle 14 et au moyen de la liaison locale 16, les données générées par les applications 22 installées dans l'unité de commande 12 uniquement si ces données correspondent à un type de données auquel la passerelle 14 est abonnée.

Par exemple, l'unité de commande 12 n'envoie à la passerelle 14 que les données auxquelles la passerelle 14 s'est préalablement abonnée, c'est-à-dire pour lesquelles elle a formulé une demande d'abonnement acceptée par l'unité 12.

De façon particulièrement avantageuse, la passerelle 14 est programmée pour mettre à jour automatiquement le statut d'abonnement des données lorsqu'une nouvelle application 22 est installée dans l'unité de commande 12. En d'autres termes, la passerelle 14 met automatiquement à jour le statut d'une donnée présente dans la liste 24 depuis « non-abonné » vers « abonné » lorsque cette donnée devient disponible suite à l'installation d'une nouvelle application 22.

Un exemple de mise en œuvre d'un tel procédé d'auto-configuration de la passerelle 14 est décrit en référence à l'ordinogramme de la figure 3.

Pour faciliter la compréhension de la description qui est faite de cet exemple, on considère ici, de façon purement illustrative et non limitative, que la liste 24 contient des types de données nommés D1, D2 et D3 auxquels elle est déjà abonnée et qui sont ici déjà générés et envoyés par une ou plusieurs applications 22 déjà installées dans l'unité de commande 12. La liste 24 comporte également des types de données nommés D4, D5, D7 et D10 que l'utilisateur souhaite recevoir à l'avenir mais qui ne sont pas générées par les applications 22 déjà installées. La passerelle 14 n'est pas abonnée aux données D4, D5, D7 et D10 et celles-ci possèdent donc, dans la liste 24, un statut d'abonnement égal à « non-souscrit ».

D'abord, lors d'une étape 100, une nouvelle application 22 est installée dans l'unité de commande 12, par exemple par un utilisateur.

En réponse, lors d'une étape 102, l'unité de commande 12 diffuse automatiquement une notification sur la liaison locale 16 pour notifier de l'installation de la nouvelle application 22.

Puis, lors d'une étape 104, l'application 22 nouvellement installée commence à générer des données. La nature des données générées dépend de la fonction programmée dans l'application 22. A ce stade, les données générées par cette application 22 pour lesquelles la passerelle 14 n'est pas encore abonnée ne sont pas envoyées sur la liaison 16. Par exemple, ces données sont temporairement stockées dans une mémoire tampon à l'intérieur de l'unité de commande 12.

Dans l'exemple illustratif considéré, l'application 22 nouvellement installée génère les données D4, D5, D6 et D7 et D10 mais celles-ci ne sont pas envoyées sur la liaison 16. En revanche, les données D1, D2 et D3 générées par d'autres applications 22 déjà installées sont envoyées sur la liaison 16 vers la passerelle 14, puisque la passerelle 14 y est abonnée.

En parallèle, lors d'une étape 106 consécutive à l'étape 102, la passerelle 14 reçoit la notification envoyée par l'unité de commande 12 sur la liaison 16. En réponse, la passerelle 14 déclenche le procédé de découverte des données générées par l'application 22 nouvellement installée.

Ainsi, lors d'une étape 108, la passerelle 14 acquiert la liste des types de données déclarées dans la liste d'abonnement 24 et auxquelles elle n'est pas encore abonnée. Dans l'exemple considéré, il s'agit des données de type D4, D5, D7 et D10.

Ensuite, lors d'une étape 110, la passerelle 14 envoie à l'unité de commande 12 une demande d'abonnement à chacun des types de données identifiés lors de l'étape 108. En d'autres termes, la passerelle 14 essaye de s'abonner aux données générées par l'application 22 nouvellement installée. Cette demande est par exemple émise sous la forme d'un message ou d'une requête par l'intermédiaire de la liaison 16.

Lors de cette étape 110, la passerelle 14 met ici à jour le statut des données correspondantes, pour indiquer qu'une demande d'abonnement est en cours. Par exemple, la variable d'état d'abonnement est changée à « en cours de découverte ».

Dans l'exemple considéré, la passerelle 14 envoie une demande d'abonnement aux données D4, D5, D7 et D10, mais pas à la donnée D6, qui ne figure pas dans la liste 24.

Lors d'une étape 112, l'unité de commande 12 reçoit la demande d'abonnement. En réponse, l'unité de commande 12 compare automatiquement les types de données listés dans la demandes d'abonnement avec les types de données générées par l'application 22 nouvellement installée. En variante, cette comparaison est également effectuée avec les données générées par toutes les applications 22 installées dans l'unité de commande 12. Par exemple, l'unité de commande 12 inspecte les données générées par l'application 22 nouvellement installée et qui sont en attente d'envoi, par exemple stockées dans la mémoire tampon.

La demande d'abonnement à un type de donnée est acceptée si des données correspondant à ce type de données ont été générées par l'application 22 nouvellement installée voire par au moins une des applications 22 déjà installées.

Dans le cas contraire, c'est-à-dire si aucune donnée correspondant à ce type de donnée n'a été générée ou trouvée parmi les données générées par l'application 22 nouvellement installée, alors la demande d'abonnement à un type de donnée est refusée.

Ensuite, lors d'une étape 114, l'unité de commande 12 envoie à la passerelle 14 une réponse pour chaque demande d'abonnement précédemment reçue, par exemple une réponse d'acceptation ou de refus d'abonnement.

Par exemple, en pratique, il peut exister un temps de latence avant que l'application nouvellement installée 22 commence à générer des données. Dans les cas où l'application 22 est capable de générer différents types de données, il est possible que ces données ne commencent pas toutes à être générées en même temps lors de l'étape 104. Certains types de données peuvent commencer à n'être générées qu'après un temps de latence plus long que certains autres types de données.

Dans l'exemple considéré, au moment où l'étape 112 est mise en œuvre, l'application 22 nouvellement installée a commencé à générer les données D4, D5 et D6, mais pas les données D7 et D10. L'unité de commande 12 accepte la demande d'abonnement pour les données D4 et D5 mais pas pour les données D7 et D10.

Enfin, lors d'une étape 116, la passerelle 14 met à jour la liste d'abonnement 24 en fonction de la réponse renvoyée par l'unité de commande 12, par exemple en changeant le statut d'abonnement vers la valeur « abonné » ou « non abonné » pour chaque type de donnée dont la demande d'abonnement a été acceptée ou refusée lors de l'étape 112. Dans l'exemple illustratif, cela concerne ici les données D4 et D5 (abonnées) et D7 et D10 (non abonnées).

Avantageusement, les étapes 108 à 116 du procédé sont répétées une ou plusieurs fois à l'issue de l'étape 116. En effet, en pratique, il est possible que certaines données n'aient pas commencé à être générées par l'application 22 du fait d'un temps de latence plus élevé que la durée de mise en œuvre de l'étape 112, ou à cause d'une perturbation temporaire affectant l'unité de commande 12. De préférence, lors de l'étape 112, le temps mis pour effectuer la comparaison reste inférieur à une durée maximale prédéfinie, afin de ne pas bloquer l'exécution du procédé. En variante, la passerelle 14 peut être programmée pour, lors de l'étape 116, considérer par défaut qu'une demande d'abonnement à un type de donnée est refusée si aucune réponse positive n'a été reçue avant l'expiration d'un délai imparti. Dans ce cas, lors de l'étape 114, l'unité de commande 12 n'envoie pas nécessairement un refus d'abonnement et seules les réponses acceptant une demande d'abonnement sont envoyées vers la passerelle 14.

Ainsi, lors d'une étape 118, la passerelle 14 détermine si une réitération du procédé, ou répétition, doit être mise en œuvre. Par exemple, le nombre d'itérations est prédéfini. Par exemple, le nombre d'itérations prédéfini est compris entre deux et dix, de préférence est compris entre trois et six, de préférence encore est égal à cinq.

Si aucune réitération n'est déterminée comme étant nécessaire, alors le procédé se termine lors d'une étape 120. Au contraire, si une réitération est mise en œuvre, alors l'étape 108 est mise en œuvre de la même façon que décrit ci-dessus.

Selon des modes de mise en œuvre, le nombre d'itération est stocké dans un compteur qui est décrémenté lors de l'étape 118 à chaque fois qu'une réitération du procédé est mise en œuvre. Le nombre d'itération est ici un entier non nul. Le compteur est réinitialisé à la valeur prédéfinie lorsque suite à l'installation d'une autre nouvelle application 22, par exemple lors de l'étape 106.

Ainsi, lors de chaque étape 118, la passerelle 14 vérifie si une réitération doit être mise en œuvre, en consultant la valeur du compteur. Si la valeur du compteur est égale à zéro, c'est qu'aucune réitération n'est nécessaire et l'étape 120 est mise en œuvre. Au contraire, si la valeur du compteur est supérieure ou égale à un, alors l'étape 108 est à nouveau mise en œuvre.

De préférence, chaque répétition étant mise en œuvre au plus tard au bout d'une première durée prédéfinie suivant la fin de la précédente répétition de ces étapes. Par exemple, la première durée prédéfinie est inférieure ou égale à 5 secondes, de préférence est inférieure ou égale à 1 seconde. Ainsi, de préférence, l'ensemble des répétitions reste inférieur à une minute, et de préférence inférieur à 30 secondes.

Ces répétitions permettent donc de prendre en compte des données générées par l'application 22 nouvellement installées, qui n'auraient pas pu être prises en compte lors de la première exécution de l'étape 112.

Dans l'exemple considéré, les données D7 et D10 commencent à être générées uniquement après la première exécution des étapes 108 à 116. Les répétitions suivantes permettent à la passerelle 14 de s'abonner aux données D7 et D10, dans la mesure où celles-ci sont alors disponibles lors d'au moins une des exécutions subséquentes de l'étape 112.

En variante, aucune répétition additionnelle 130 n'est mise en œuvre et le procédé passe directement à l'étape 120 suite à l'étape 116.

De façon avantageuse, le procédé comporte également une répétition additionnelle 130 au cours de laquelle les étapes 108 à 116 sont à nouveau mises en œuvre. Cette répétition 130 est mise en œuvre indépendamment des éventuelles répétitions mises en place après l'étape 118.

Par exemple, la répétition 130 est déclenchée automatiquement à l'expiration 'une deuxième durée prédéfinie suite au démarrage du procédé lors de l'étape 106. En variante, cette durée peut être décomptée depuis l'étape 120 à la fin de la dernière des répétitions précédentes. A titre d'exemple, la deuxième durée est supérieure ou égale à une heure. Par exemple, la deuxième durée est supérieure à la première durée. En d'autres termes, la répétition additionnelle 130 est mise en œuvre avec un cycle plus long que les autres répétitions du procédé.

La répétition additionnelle 130 permet de prendre en compte des données générées par l'application 22 nouvellement installée, qui n'auraient pas pu être prises en compte lors de la première exécution de l'étape 112 à cause d'une perturbation ponctuelle qui aurait pu durer suffisamment longtemps pour affecter également les répétitions déclenchées après l'étape 118. Comme la répétition 130 est mise en place longtemps après les répétitions déclenchées après l'étape 118, le risque d'être affectée par cette perturbation ponctuelle est moindre, puisqu'il y a plus de chance que cette perturbation ponctuelle ait disparu entre temps.

En variante, aucune répétition additionnelle 130 n'est mise en œuvre.

En parallèle à ces étapes, une fois qu'une demande d'abonnement pour un type de données est acceptée à l'issue de l'étape 112, l'unité de commande 12 autorise l'envoi vers la passerelle 14 des données générées par l'application 22 nouvellement installée et correspondant à ce type de données.

Grâce à l'invention, l'interface de communication est automatiquement paramétrée suite à l'installation d'une application, sans requérir d'intervention manuelle de l'utilisateur lors de chaque installation, car cela compliquerait considérablement l'utilisation de l'appareil. On évite également de saturer inutilement les liaisons d'échanges de données en envoyant des données dont l'utilisateur n'a pas besoin. Ainsi, le comportement évolutif et modulaire de l'appareil 2 est préservé, et ceci sans interrompre le fonctionnement ni redémarrer les appareils 2 et 14 ou réinitialiser les communications tout en assurant une simplicité d'utilisation satisfaisante.

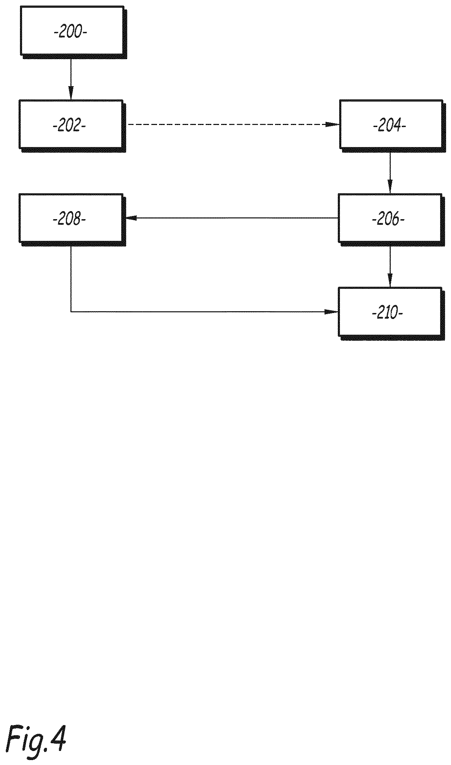

La figure 4 représente un exemple d'un procédé de désabonnement automatique optionnellement mis en œuvre par la passerelle 14 suite à la désinstallation d'une application 22.

Par exemple, lors d'une étape 200, une application 22 précédemment installée est désinstallée de l'unité de commande 12. Les données précédemment générées par cette application 22 et auxquelles la passerelle 14 était abonnée cessent donc d'être générées lors d'une étape 202.

En réponse, lors d'une étape 204, la passerelle 14 détecte qu'elle ne reçoit sur la liaison 16 plus les données correspondant à au moins un des types de données auxquelles elle est abonnée.

Selon des modes de réalisation préférentiels, cette détection est basée sur la valeur de périodicité 42 contenue dans la dernière trame reçue pour cette donnée. Par exemple, cette valeur de périodicité 42 annonce le délai maximal au bout duquel la prochaine trame 30 est censée être reçue pour cette donnée. Ainsi, la passerelle 14 considère une donnée associée à un type de donnée comme n'étant plus reçue si aucune donnée correspondant à ce type de donnée n'a été reçue au bout d'une durée supérieure à la valeur de périodicité 42 contenue dans la dernière trame reçue pour ce type de donnée. En variante, la détection peut être réalisée différemment.

Lors d'une étape 206, la passerelle 14 envoie à nouveau une demande d'abonnement à l'unité de commande 12 sur la liaison 16. Au cours d'une étape 208, l'unité de commande 12 traite la demande et (du fait de l'absence du module 22) envoi un refus d'abonnement au travers de la liaison 16 à la passerelle 14 en conséquence le statut des données de la liste d'abonnement 24 passe à l'état « non abonné ».

Enfin, lors d'une étape 210, la passerelle 14 met à jour le statut d'abonnement du ou des types de données correspondant, par exemple en modifiant la liste 24 pour changer le statut d'abonnement des données correspondantes à la valeur « non-abonné ».

Les modes de réalisation et les variantes envisagés ci-dessus peuvent être combinés entre eux pour générer de nouveaux modes de réalisation.

## Revendications

1. Procédé de fonctionnement d'un appareil électrique (2), tel qu'un appareil de mesure ou de protection ou de commande d'une installation électrique (4), l'appareil électrique (2) comportant une unité de commande électronique (12) connectable à une passerelle de communication (14) par une liaison locale (16) d'échange de données via une interface de communication de l'appareil électrique ;
l'unité de commande (12) recevant une ou plusieurs applications (22) logicielles exécutables, chaque application (22) générant des données selon un ou plusieurs types prédéfinis de données lorsqu'elle est exécutée par l'unité de commande (12),
l'unité de commande (12) envoyant, vers la passerelle de communication (14) et au moyen de la liaison locale (16) d'échange de données, les données générées par les applications (22) installées dans l'unité de commande (12), uniquement si ces données correspondent à un type de données auquel la passerelle de communication (14) est abonnée ;
ce procédé comportant des étapes d'auto-configuration de l'interface de communication, mises en œuvre automatiquement suite à l'installation (100) d'une nouvelle application (22) au cours du fonctionnement de l'appareil électrique (2), dans laquelle :
- l'unité de commande (12) diffuse (102), sur la liaison locale (16) de données, une notification de l'installation d'une nouvelle application (22) ;
- l'unité de commande (12) reçoit, en réponse, de la passerelle de communication, une demande d'abonnement à des types de données auxquels la passerelle n'est pas encore abonnée et, en réponse, compare (112) les types listés dans la demande d'abonnement avec les types de données générées par l'application nouvellement installée (22), la demande d'abonnement à un type de donnée étant acceptée (114) si des données correspondant à ce type de données ont été générées (104), la demande d'abonnement à un type de donnée étant refusée dans le cas contraire ;
- l'unité de commande renvoie une réponse à la passerelle de communication pour mise à jour du statut d'abonnement accepté ou refusé pour chaque type de donnée dont la demande d'abonnement a été acceptée ou refusée.

2. Procédé selon la revendication 1, dans lequel les étapes de réception d'une demande d'abonnement, de comparaison et de renvoi d'une réponse sont répétées (118) avec un nombre d'itérations prédéfini, par exemple compris entre deux et dix, de préférence est compris entre trois et six, de préférence encore est égal à cinq.

3. Procédé selon la revendication 2, dans lequel chaque répétition étant mise en œuvre au plus tard au bout d'une durée prédéfinie suivant la fin de la précédente répétition de ces étapes.

4. Procédé selon la revendication 3, dans lequel la durée prédéfinie est inférieure ou égale à 5 secondes, de préférence est inférieure ou égale à 1 seconde.

5. Procédé selon l'une quelconque des revendications précédentes, dans lequel les étapes de réception d'une demande d'abonnement, de comparaison et de renvoi d'une réponse sont répétées (130) au bout d'une deuxième durée prédéfinie.

6. Procédé selon la revendication 3 ou 4 et selon la revendication 5, dans lequel la deuxième durée est supérieure à la première durée, par exemple supérieure ou égale à une heure.

7. Procédé selon l'une quelconque des revendications 1 à 6, comportant en outre des étapes de désabonnement automatique, dans lesquelles :
- l'unité de commande reçoit de nouveau une demande d'abonnement envoyée (206) par la passerelle de communication après que la passerelle de communication a détecté qu'elle ne reçoit plus de données correspondant à un des types de données auxquelles elle est abonnée ;
- L'unité de commande répond par un refus d'abonnement pour que la passerelle de communication (14) mette à jour le statut des données correspondantes de la liste d'abonnement (24) vers un statut « non-abonné ».

8. Procédé selon la revendication 7, dans lequel les données émises par l'unité de commande (12) sur la liaison locale (16) d'échange de données sont encapsulées au sein de trames (30), chaque trame comportant des métadonnées (32) d'adressage et de synchronisation incluant une valeur de périodicité d'envoi (42) de ce type de donnée, et dans lequel, la passerelle de communication (14) considère une donnée associée à un type de donnée comme n'étant plus reçue si aucune donnée correspondant à ce type de donnée n'a été reçue au bout d'une durée supérieure à la valeur de périodicité d'envoi contenue dans la dernière trame reçue pour ce type de donnée.

9. Procédé selon l'une quelconque des revendications précédentes, dans lequel postérieurement à l'étape de renvoi d'une réponse à la passerelle de communication, l'unité de commande (12) autorise l'envoi, sur la liaison interne (16) d'échange de données et à destination de la passerelle de communication (14), des données générées par l'application (22) nouvellement installée correspondant aux types de données pour lesquels la passerelle de communication (14) est abonnée.

10. Procédé de fonctionnement d'un ensemble comportant un appareil électrique (2) et une passerelle de communication l'appareil électrique (2) comportant une unité de commande électronique (12) connecté à la passerelle de communication (14) par une liaison locale (16) d'échange de données via une interface de communication de l'appareil électrique,
l'unité de commande (12) recevant une ou plusieurs applications (22) logicielles exécutables, chaque application (22) générant des données selon un ou plusieurs types prédéfinis de données lorsqu'elle est exécutée par l'unité de commande (12),
l'unité de commande (12) envoyant, vers la passerelle de communication (14) et au moyen de la liaison locale (16) d'échange de données, les données générées par les applications (22) installées dans l'unité de commande (12), uniquement si ces données correspondent à un type de données auquel la passerelle de communication (14) est abonnée ;
dans lequel le procédé comporte des étapes d'auto-configuration de l'interface de communication, telles que définies par l'une quelconque des revendications 1 à 9,
dans lequel la passerelle de communication (14) enregistre le statut d'abonnement pour chaque type de donnée ;
dans lequel, en réponse à la diffusion par l'unité de commande d'une notification de l'installation d'une nouvelle application, la passerelle de communication (14) acquiert (108) la liste des types de données auquel elle n'est pas encore abonnée puis envoie (110) à l'unité de commande (12) une demande d'abonnement à ces types de données ;
dans lequel la passerelle de communication met à jour (116), en fonction de la réponse renvoyée par l'unité de commande, le statut d'abonnement accepté ou refusé pour chaque type de donnée dont la demande d'abonnement a été acceptée ou refusée.

11. Procédé selon la revendication 10 et la revendication 7, dans lequel :
- la passerelle de communication (14) détecte (204) qu'elle ne reçoit plus de données correspondant à un des types de données auxquelles elle est abonnée ;
- en réponse, la passerelle de communication (14) envoie de nouveau (206) une demande d'abonnement à l'unité de commande ;
- après réception d'un refus d'abonnement envoyé par l'unité de commande, la passerelle de communication (14) met à jour le statut des données correspondantes de la liste d'abonnement (24) vers un statut « non-abonné ».

12. Appareil électrique (2), tel qu'un appareil de mesure ou de protection ou de commande d'une installation électrique (4), l'appareil électrique (2) comportant une unité de commande électronique (12) connectable à une passerelle de communication (14) par une liaison locale (16) d'échange de données via une interface de communication de l'appareil électrique ;
l'unité de commande (12) étant apte à recevoir une ou plusieurs applications (22) logicielles exécutables, chaque application (22) étant programmée pour générer des données selon un ou plusieurs types prédéfinis de données lorsqu'elle est exécutée par l'unité de commande (12) ;
l'unité de commande (12) étant configurée pour envoyer, vers la passerelle de communication (14) et au moyen de la liaison locale (16) d'échange de données, les données générées par les applications (22) installées dans l'unité de commande (12), uniquement si ces données correspondent à un type de données auquel la passerelle de communication (14) est abonnée, ;
l'unité de commande étant en outre programmée pour mettre en œuvre automatiquement des étapes d'auto-configuration de l'interface de communication, suite à l'installation (100) d'une nouvelle application (22) au cours du fonctionnement de l'appareil électrique (2), dans laquelle :
- l'unité de commande (12) diffuse (102), sur la liaison locale (16) de données, une notification de l'installation d'une nouvelle application (22) ;
- lorsque l'unité de commande (12) reçoit en réponse, de la passerelle de communication, une demande d'abonnement à des types de données auxquels la passerelle n'est pas encore abonnée, alors en réponse, l'unité de commande compare (112) les types listés dans la demande d'abonnement avec les types de données générées par l'application nouvellement installée (22), la demande d'abonnement à un type de donnée étant acceptée (114) si des données correspondant à ce type de données ont été générées (104), la demande d'abonnement à un type de donnée étant refusée dans le cas contraire ;
- l'unité de commande renvoie une réponse à la passerelle de communication pour mise à jour du statut d'abonnement pour chaque type de donnée dont la demande d'abonnement a été acceptée ou refusée.

13. Ensemble comportant un appareil électrique (2), tel qu'un appareil de mesure ou de protection ou de commande d'une installation électrique (4), et une passerelle de communication (14), l'appareil électrique (2) comportant une unité de commande électronique (12) connectée à la passerelle de communication (14) par une liaison locale (16) d'échange de données via une interface de communication de l'appareil électrique ;
l'appareil électrique étant conforme à la revendication 12,
la passerelle de communication (14) étant en outre programmée pour :
- enregistrer le statut d'abonnement pour chaque type de donnée ;
- en réponse à la diffusion par l'unité de commande d'une notification de l'installation d'une nouvelle application, acquérir (108) la liste des types de données auquel elle n'est pas encore abonnée puis envoyer (110) à l'unité de commande (12) une demande d'abonnement à ces types de données ;
- -mettre à jour (116), en fonction de la réponse renvoyée par l'unité de commande, le statut d'abonnement accepté ou refusé pour chaque type de donnée dont la demande d'abonnement a été acceptée ou refusée.

## Patentansprüche

1. Verfahren zum Betreiben eines elektrischen Geräts (2), wie eines Mess- oder Schutzgeräts oder eines Steuergeräts einer elektrischen Anlage (4), wobei das elektrische Gerät (2) eine elektronische Steuereinheit (12) aufweist, die über eine Kommunikationsschnittstelle des elektrischen Geräts mittels einer lokalen Datenaustauschverbindung (16) mit einem Kommunikation-Gateway (14) verbindbar ist; wobei
die Steuereinheit (12) eine oder mehrere ausführbare Softwareanwendungen (22) empfängt, wobei jede Anwendung (22) Daten gemäß einem oder mehreren vordefinierten Datentypen erzeugt, wenn sie von der Steuereinheit (12) ausgeführt wird,
die Steuereinheit (12) die von den in der Steuereinheit (12) installierten Anwendungen (22) erzeugten Daten mittels der lokalen Datenaustauschverbindung (16) an das Kommunikation-Gateway (14) nur dann sendet, wenn diese Daten einem Datentyp entsprechen, für den das Kommunikation-Gateway (14) abonniert ist;
dieses Verfahren Schritte der Autokonfiguration der Kommunikationsschnittstelle aufweist, die automatisch nach der Installation (100) einer neuen Anwendung (22) während des Betriebs des elektrischen Geräts (2) durchgeführt werden, wobei:
- die Steuereinheit (12) auf der lokalen Datenverbindung (16) eine Benachrichtigung der Installation einer neuen Anwendung (22) sendet (102);
- die Steuereinheit (12) als Antwort vom Kommunikation-Gateway eine Aufforderung zum Abonnieren von Datentypen empfängt, die das Gateway noch nicht abonniert hat, und als Antwort die in der Aufforderung zum Abonnieren aufgelisteten Typen mit den von der neu installierten Anwendung (22) erzeugten Datentypen vergleicht (112), wobei die Aufforderung zum Abonnieren für einen Datentyp angenommen wird (114), wenn Daten, die diesem Datentyp entsprechen, erzeugt wurden (104) und andernfalls die Aufforderung zum Abonnieren für einen Datentyp abgelehnt wird;
- die Steuereinheit eine Antwort zurück an das Kommunikation-Gateway sendet, um den angenommenen oder abgelehnten Abonnementstatus für jeden Datentyp zu aktualisieren, dessen Aufforderung zum Abonnieren angenommen oder abgelehnt wurde.

2. Verfahren nach Anspruch 1, bei dem die Schritte des Empfangens einer Aufforderung zum Abonnieren, des Vergleichens und des Zurücksendens einer Antwort mit einer vordefinierten Anzahl von Iterationen wiederholt werden (118), zum Beispiel zwischen zwei und zehn, vorzugsweise zwischen drei und sechs, besonders bevorzugt gleich fünf.

3. Verfahren nach Anspruch 2, bei dem jede Wiederholung spätestens nach einer vordefinierten Zeit nach dem Ende der vorherigen Wiederholung dieser Schritte durchgeführt wird.

4. Verfahren nach Anspruch 3, bei dem die vordefinierte Zeit weniger als oder gleich 5 Sekunden, vorzugsweise weniger als oder gleich 1 Sekunde beträgt.

5. Verfahren nach einem beliebigen der vorhergehenden Ansprüche, bei dem die Schritte des Empfangens einer Aufforderung zum Abonnieren, des Vergleichens und des Zurücksendens einer Antwort am Ende einer zweiten vordefinierten Dauer wiederholt werden (130).

6. Verfahren nach Anspruch 3 oder 4 und nach Anspruch 5, bei dem die zweite Dauer länger als die erste Dauer, beispielsweise länger als eine oder gleich einer Stunde ist.

7. Verfahren nach einem beliebigen der Ansprüche 1 bis 6, das außerdem Schritte zum automatischen Abbestellen aufweist, bei denen:
- die Steuereinheit erneut eine vom Kommunikations-Gateway gesendete (206) Aufforderung zum Abonnieren empfängt, nachdem das Kommunikations-Gateway festgestellt hat, dass es keine Daten mehr empfängt, die einem der Datentypen entsprechen, auf die es abonniert ist;
- die Steuereinheit mit einer Verweigerung des Abonnements antwortet, um das Kommunikations-Gateway (14) zu veranlassen, den Status der entsprechenden Daten in der Abonnementliste (24) auf einen "Nicht-Abonnent"-Status zu aktualisieren.

8. Verfahren nach Anspruch 7, bei dem die von der Steuereinheit (12) auf der lokalen Datenaustauschverbindung (16) übertragenen Daten in Rahmen (30) gekapselt werden, wobei jeder Rahmen Adressierungs- und Synchronisations-Metadaten (32) einschließlich eines Sendeperiodizitätswertes (42) für diesen Datentyp umfasst, und bei dem das Kommunikations-Gateway (14) ein zu einem Datentyp zugeordnetes Datenelement als nicht mehr empfangen betrachtet, wenn nach einer Dauer, die größer ist als der im zuletzt empfangenen Rahmen für diesen Datentyp enthaltene Sendeperiodizitätswert, kein diesem Datentyp entsprechendes Datenelement empfangen wurde.

9. Verfahren nach einem beliebigen der vorhergehenden Ansprüche, bei dem die Steuereinheit (12) nach dem Schritt des Zurücksendens einer Antwort an das Kommunikations-Gateway das Senden der von der neu installierten Anwendung (22) erzeugten Daten, die den Datentypen entsprechen, für die das Kommunikations-Gateway (14) abonniert ist, auf der internen Datenaustauschverbindung (16) und an das Kommunikations-Gateway (14) autorisiert.

10. Verfahren zum Betreiben einer Baugruppe, die ein elektrischen Gerät (2) und ein Kommunikations-Gateway aufweist; wobei
das elektrische Gerät (2) eine elektronische Steuereinheit (12) aufweist, die über eine Kommunikationsschnittstelle des elektrischen Geräts mittels einer lokalen Datenaustauschverbindung (16) mit einem Kommunikations-Gateway (14) verbunden ist,
die Steuereinheit (12) eine oder mehrere ausführbare Softwareanwendungen (22) empfängt, wobei jede Anwendung (22) Daten gemäß einem oder mehreren vordefinierten Datentypen erzeugt, wenn sie von der Steuereinheit (12) ausgeführt wird,
die Steuereinheit (12) die von den in der Steuereinheit (12) installierten Anwendungen (22) erzeugten Daten mittels der lokalen Datenaustauschverbindung (16) an das Kommunikation-Gateway (14) nur dann sendet, wenn diese Daten einem Datentyp entsprechen, für den das Kommunikation-Gateway (14) abonniert ist;
wobei das Verfahren Schritte zur Selbstkonfiguration der Kommunikationsschnittstelle, wie in einem beliebigen der Ansprüche 1 bis 9 definiert, aufweist,
wobei das Kommunikation-Gateway (14) den Abonnementstatus für jeden Datentyp aufzeichnet;
wobei das Kommunikation-Gateway (14) als Antwort auf die von der Steuereinheit gesendeten Benachrichtigung der Installation einer neuen Anwendung die Liste der Datentypen beschafft (108), die es noch nicht abonniert hat, und dann eine Aufforderung zum Abonnieren dieser Datentypen an die Steuereinheit (12) sendet (110);
wobei das Kommunikation-Gateway abhängig von der von der Steuereinheit zurückgesandten Antwort den angenommenen oder abgelehnten Abonnementstatus für jeden Datentyp aktualisiert (116), dessen Aufforderung zum Abonnieren angenommen oder abgelehnt wurde.

11. Verfahren nach Anspruch 10 und Anspruch 7, bei dem:
- das Kommunikation-Gateway (14) detektiert (204), dass es keine Daten mehr empfängt, die einem der Datentypen entsprechen, auf die es abonniert ist;
- das Kommunikation-Gateway (14) daraufhin erneut (206) eine Aufforderung zum Abonnieren an die Steuereinheit sendet;
- nach dem Empfang einer Verweigerung des Abonnements, die von der Steuereinheit gesendet wurde, das Kommunikation-Gateway (14) den Status der entsprechenden Daten in der Abonnementliste (24) auf einen "Nicht-Abonnent"-Status aktualisiert.

12. Elektrisches Gerät (2), wie ein Mess- oder Schutzgerät oder ein Steuergerät für eine elektrische Anlage (4), wobei das elektrische Gerät (2) eine elektronische Steuereinheit (12) aufweist, die über eine Kommunikationsschnittstelle des elektrischen Geräts mittels einer lokalen Datenaustauschverbindung (16) mit einem Kommunikation-Gateway (14) verbindbar ist; wobei
die Steuereinheit (12) geeignet ist, eine oder mehrere ausführbare Softwareanwendungen (22) zu empfangen, wobei jede Anwendung (22) programmiert ist, Daten gemäß einem oder mehreren vordefinierten Datentypen zu erzeugen, wenn sie von der Steuereinheit (12) ausgeführt wird;
die Steuereinheit (12) ausgebildet ist, die von den in der Steuereinheit (12) installierten Anwendungen (22) erzeugten Daten mittels der lokalen Datenaustauschverbindung (16) an das Kommunikation-Gateway (14) nur dann zu senden, wenn diese Daten einem Datentyp entsprechen, für den das Kommunikation-Gateway (14) abonniert ist;
wobei die Steuereinheit außerdem programmiert ist, automatisch Schritte der Autokonfiguration der Kommunikationsschnittstelle nach der Installation (100) einer neuen Anwendung (22) während des Betriebs des elektrischen Geräts (2) durchzuführen, wobei:
- die Steuereinheit (12) auf der lokalen Datenverbindung (16) eine Benachrichtigung der Installation einer neuen Anwendung (22) sendet (102);
- wenn die Steuereinheit (12) als Antwort vom Kommunikation-Gateway eine Aufforderung zum Abonnieren von Datentypen empfängt, die das Gateway noch nicht abonniert hat, dann die Steuereinheit als Antwort die in der Aufforderung zum Abonnieren aufgelisteten Typen mit den von der neu installierten Anwendung (22) erzeugten Datentypen vergleicht (112), wobei die Aufforderung zum Abonnieren für einen Datentyp angenommen wird (114), wenn Daten, die diesem Datentyp entsprechen, erzeugt wurden (104) und andernfalls die Aufforderung zum Abonnieren für einen Datentyp abgelehnt wird;
- die Steuereinheit eine Antwort zurück an das Kommunikation-Gateway sendet, um den Abonnementstatus für jeden Datentyp zu aktualisieren, dessen Aufforderung zum Abonnieren angenommen oder abgelehnt wurde.

13. Baugruppe, die ein elektrisches Gerät (2), wie ein Mess- oder Schutzgerät oder ein Steuergerät für einer elektrischen Anlage (4), und ein Kommunikation-Gateway (14) aufweist, wobei das elektrische Gerät (2) eine elektronische Steuereinheit (12) aufweist, die über eine Kommunikationsschnittstelle des elektrischen Geräts mittels einer lokalen Datenaustauschverbindung (16) mit dem Kommunikation-Gateway (14) verbunden ist; wobei
das elektrische Gerät nach Anspruch 12 ausgebildet ist,
das Kommunikation-Gateway (14) weiterhin programmiert ist, um:
- den Abonnementstatus für jeden Datentyp aufzuzeichnen;
- als Antwort auf eine von der Steuereinheit gesendeten Benachrichtigung der Installation einer neuen Anwendung die Liste der Datentypen zu beschaffen (108), die es noch nicht abonniert hat, und dann eine Aufforderung zum Abonnieren dieser Datentypen an die Steuereinheit (12) zu senden (110);
- abhängig von der von der Steuereinheit zurückgesandten Antwort den angenommenen oder abgelehnten Abonnementstatus für jeden Datentyp zu aktualisieren (116), dessen Aufforderung zum Abonnieren angenommen oder abgelehnt wurde.

## Claims

1. Method for operating an electrical apparatus (2), such as a measurement or protection or control apparatus of an electrical installation (4), the electrical apparatus (2) comprising an electronic control unit (12) which can be connected to a communication gateway (14) by a local data exchange link (16) *via* a communication interface of the electrical apparatus;
the control unit (12) receiving one or more executable software applications (22), each application (22) generating data according to one or more predefined data types when it is executed by the control unit (12),
the control unit (12) sending the data generated by the applications (22) installed in the control unit (12) to the communication gateway (14) by means of the local data exchange link (16) only if those data correspond to a data type to which the communication gateway (14) is subscribed;
this method comprising steps of auto-configuration of the communication interface which are carried out automatically following the installation (100) of a new application (22) in the course of the operation of the electrical apparatus (2), wherein:
- the control unit (12) broadcasts (102), on the local data link (16), a notification of the installation of a new application (22);
- the control unit (12) receives, in response, a request from the communication gateway for subscription to data types to which the gateway is not yet subscribed and, in response, compares (112) the types listed in the subscription request with the data types generated by the newly installed application (22), the request for subscription to a data type being accepted (114) if data corresponding to that data type have been generated (104), the request for subscription to a data type otherwise being refused;
- the control unit sends a response to the communication gateway for updating of the accepted or refused subscription status for each data type for which the subscription request has been accepted or refused.

2. Method according to claim 1, wherein the steps of receiving a subscription request, of comparing and of sending a response are repeated (118) with a predefined number of iterations, for example between two and ten, preferably between three and six, yet more preferably equal to five.

3. Method according to claim 2, wherein each repetition is carried out at the latest after a predefined period of time following the end of the preceding repetition of the steps.

4. Method according to claim 3, wherein the predefined period of time is less than or equal to 5 seconds, preferably less than or equal to 1 second.

5. Method according to any one of the preceding claims, wherein the steps of receiving a subscription request, of comparing and of sending a response are repeated (130) after a second predefined period of time.

6. Method according to claim 3 or 4 and according to claim 5, wherein the second period of time is greater than the first period of time, for example greater than or equal to one hour.

7. Method according to any one of claims 1 to 6, further comprising steps of automatic unsubscription, wherein:
- the control unit again receives a subscription request sent (206) by the communication gateway after the communication gateway has detected that it no longer receives data corresponding to one of the data types to which it is subscribed;
- the control unit responds with a refusal of subscription so that the communication gateway (14) updates the status of the corresponding data of the subscription list (24) to an "unsubscribed" status.

8. Method according to claim 7, wherein the data transmitted by the control unit (12) on the local data exchange link (16) are encapsulated within frames (30), each frame comprising addressing and synchronisation metadata (32) including a predefined transmission periodicity value (42) for that data type, and wherein the communication gateway (14) considers a datum associated with a data type as no longer being received if no datum corresponding to that data type has been received after a period of time which is greater than the transmission periodicity value contained in the last frame received for that data type.

9. Method according to any one of the preceding claims, wherein, following the step of sending a response to the communication gateway, the control unit (12) authorises the sending, on the internal data exchange link (16) and to the communication gateway (14), of the data generated by the newly installed application (22) that correspond to the data types for which the communication gateway (14) is subscribed.

10. Method for operating an assembly comprising an electrical apparatus (2) and a communication gateway,
the electrical apparatus (2) comprising an electronic control unit (12) which is connected to the communication gateway (14) by a local data exchange link (16) *via* a communication interface of the electrical apparatus,
the control unit (12) receiving one or more executable software applications (22), each application (22) generating data according to one or more predefined data types when it is executed by the control unit (12),
the control unit (12) sending the data generated by the applications (22) installed in the control unit (12) to the communication gateway (14) by means of the local data exchange link (16) only if those data correspond to a data type to which the communication gateway (14) is subscribed;
wherein the method comprises steps of auto-configuration of the communication interface as defined by any one of claims 1 to 9,
wherein the communication gateway (14) records the subscription status for each data type;
wherein, in response to the broadcast by the control unit of a notification of the installation of a new application, the communication gateway (14) acquires (108) the list of the data types to which it is not yet subscribed and then sends (110) a request for subscription to those data types to the control unit (12);
wherein the communication gateway updates (116), as a function of the response sent by the control unit, the accepted or refused subscription status for each data type for which the request for subscription has been accepted or refused.

11. Method according to claim 10 and claim 7, wherein:
- the communication gateway (14) detects (204) that it no longer receives data corresponding to one of the data types to which it is subscribed;
- in response, the communication gateway (14) again sends (206) a subscription request to the control unit;
- after receiving a refusal of subscription sent by the control unit, the communication gateway (14) updates the status of the corresponding data of the subscription list (24) to an "unsubscribed" status.

12. Electrical apparatus (2), such as a measurement or protection or control apparatus of an electrical installation (4), the electrical apparatus (2) comprising an electronic control unit (12) which can be connected to a communication gateway (14) by a local data exchange link (16) *via* a communication interface of the electrical apparatus;
the control unit (12) being capable of receiving one or more executable software applications (22), each application (22) being programmed to generate data according to one or more predefined data types when it is executed by the control unit (12);
the control unit (12) being configured to send the data generated by the applications (22) installed in the control unit (12) to the communication gateway (14) by means of the local data exchange link (16) only if those data correspond to a data type to which the communication gateway (14) is subscribed;
the control unit further being programmed to automatically carry out steps of auto-configuration of the communication interface following the installation (100) of a new application (22) in the course of the operation of the electrical apparatus (2), wherein:
- the control unit (12) broadcasts (102), on the local data link (16), a notification of the installation of a new application (22);
- when the control unit (12) receives, in response, a request from the communication gateway for subscription to data types to which the gateway is not yet subscribed, the control unit, in response, compares (112) the types listed in the subscription request with the data types generated by the newly installed application (22), the request for subscription to a data type being accepted (114) if data corresponding to that data type have been generated (104), the request for subscription to a data type otherwise being refused;
- the control unit sends a response to the communication gateway for updating of the subscription status for each data type for which the subscription request has been accepted or refused.

13. Assembly comprising an electrical apparatus (2), such as a measurement or protection or control apparatus of an electrical installation (4), and a communication gateway (14), the electrical apparatus (2) comprising an electronic control unit (12) which is connected to the communication gateway (14) by a local data exchange link (16) *via* a communication interface of the electrical apparatus;
the electrical apparatus being in accordance with claim 12,
the communication gateway (14) further being programmed:
- to record the subscription status for each data type;
- in response to the broadcast by the control unit of a notification of the installation of a new application, to acquire (108) the list of the data types to which it is not yet subscribed and then to send (110) a request for subscription to those data types to the control unit (12);
- to update (116), as a function of the response sent by the control unit, the accepted or refused subscription status for each data type for which the subscription request has been accepted or refused.
